# EUROPEAN PATENT APPLICATION

(11) **EP 4 534 974 A1**
(43) Date of publication of application: **09.04.2025**
(21) Application number: 23816192.1
(22) Date of filing: 27.02.2023
(51) Int. Cl.: G01N 15/02, G01N 15/00

(54) **DEVICE AND METHOD FOR PARTICLE SIZE MANAGEMENT**

(30) Priority: 02.06.2022 KR 20220067711
(71) Applicant: POSCO Co., Ltd, Pohang-si, Gyeongsangbuk-do 37859 (KR)
(72) Inventor: JANG, Dong Min, Pohang-si, Gyeongsangbuk-do 37669 (KR); LEE, Seung Jae, Pohang-si, Gyeongsangbuk-do 37671 (KR); LIM, Hyo Jun, Pohang-si, Gyeongsangbuk-do 37655 (KR)
(74) Representative: Zech, Stefan Markus
(86) International application number: PCT/KR2023/002726
(87) International publication number: WO 2023/234521

(57) **Abstract**

Disclosed are a device for particle size management includes: a transport unit configured to transport a raw material; a sorting unit configured to sort small particles from the raw material and retain large particles greater than the small particles; a photographing unit arranged to face the transport unit to obtain an image of the large particles; and an analysis unit configured to analyze a particle size distribution of the raw material from the image obtained by the photographing unit and a method applied to the device. The device and method for particle size management may accurately analyze and manage the particle size of the raw material.

## Description

### TECHNICAL FIELD

The present disclosure relates to a device and a method for particle size management, and more particularly, to a device and a method for particle size management, which are capable of accurately analyzing and managing a particle size of a raw material.

### BACKGROUND ART

A process of producing metallurgical coke is as follows. Blended coal is manufactured by crushing various types of coal stored in a yard by coal types and mixing the crushed coal based on a pre-calculated mixing ratio. Thereafter, the blended coal is charged into a coke oven and then carbonized at a high temperature to produce coke. Here, a particle size distribution of the crushed coal is an important factor affecting a quality of the coke.

That is, when producing the blended coal, the coke having a desired quality may be produced in a coke oven by mixing the crushed coal evenly according to a mixing ratio calculated in consideration of a coking property or fluidity. Here, a particle size of the crushed coal is required to be managed within a certain range in order for the crushed coal to be evenly mixed evenly.

Conventionally, the particle size of the crushed coal is managed by collecting and drying a predetermined amount of sample from the crushed coal and then sorting the dried coal based on the particle size. From the result, the particle size distribution is evaluated. This conventional method has a problem in that an evaluation result is varied depending on a sampling method or the number of times of sampling.

A background technology of the present disclosure is disclosed in following patent documents.

### (PATENT DOCUMENT)

(Patent Document 1) KR10-1625962 B1
(Patent Document 2) KR10-1673273 B1

### DISCLOSURE OF THE INVENTION

### TECHNICAL PROBLEM

The present disclosure provides a device and a method for particle size management, which are capable of accurately analyzing and managing a particle size of a raw material.

### TECHNICAL SOLUTION

In accordance with an exemplary embodiment, a device for particle size management includes: a transport unit configured to transport a raw material; a sorting unit configured to sort small particles from the raw material and retain large particles greater than the small particles; a photographing unit arranged to face the transport unit to obtain an image of the large particles; and an analysis unit configured to analyze a particle size distribution of the raw material from the image obtained by the photographing unit.

The device may further include a return unit connected to the sorting unit and disposed on the transport unit to return the sorted small particles onto the large particles from which the image is obtained.

The device may further include a management unit configured to control a supply condition of a subsequent raw material to be supplied to the transport unit by using the particle size distribution analyzed by the analysis unit.

The transport unit may include: a hopper configured to receive the raw material; and a transporter having a belt configured to continuously transport the raw material discharged from the hopper.

The sorting unit may include a suctioner having an opened surface facing the transport unit to suction the small particles and a suction pump connected to the suctioner.

The sorting unit may have a sieve having a plurality of openings for suctioning the small particles from the raw material.

The opening may have a size greater than 0 mm and less than 3 mm.

The sieve may be disposed continuously in a direction of a width of the belt between 10% to 90% of the width of the belt configured to transport the raw material.

The sorting unit may include one of a first sorter configured to sink the small particles relative to the large particles from a top surface of the raw material and a second sorter configured to roll the small particles along the top surface of the raw material so that the small particles are spaced apart from the large particles.

A photographing area of the photographing unit may include the entire width of the belt configured to transport the raw material.

A plurality of hoppers may be provided to receive a plurality of types of raw materials, respectively, the transporter may include a plurality of first transporters connected to the hoppers, respectively, and a second transporter connected to the plurality of first transporters, and the sorting unit and the photographing unit may be disposed at a side of the plurality of first transporters.

The sorting unit may be disposed at a side of one or more first transporters selected from among the plurality of first transporters, and the photographing unit may be disposed at a side of each of the transporters at which the sorting units are disposed.

The photographing unit may obtain an image of the large particles from which the small particles are separated, and the analysis unit may analyze the particle size distribution by identifying individual large particles in a photographed image and obtain the particle size distribution of the entire raw material by using the analyzed particle size distribution of the large particles.

The analysis unit may derive an area of the identified large particles, sort the large particles into different sizes for each area, calculate a total area ratio on the image obtained for each sorted large particle, convert the total area ratio obtained for each sorted large particle based on data learned in advance by artificial intelligence into a weight ratio, analyze the weight ratio for each sorted large particle as the particle size distribution of the large particles, calculate a weight ratio of the separated small particles by using the weight ratio for each large particle, and calculate the particle size distribution of the entire raw material by using the weight ratio for each large particle and the weight ratio for each small particle.

The analysis unit may sort the sorted large particles into a plurality of groups according to sizes to analyze the weight ratio for sorted large particles as the particle size distribution of the large particles, and calculate the particle size distribution of the entire raw material by using the weight ratio for each group of the large particles and the weight ratio for each group of the small particles.

The analysis unit may apply the particle size distribution obtained from the raw material transported by the selected first transporter to all of a plurality of raw materials by using crushing characteristics of the plurality of raw materials.

The management unit may compare the particle size distribution of the entire raw material analyzed by the analysis unit with a preset reference particle size distribution and, according to a comparison result, control a crushing condition of a subsequent raw material to be supplied to the transport unit, thereby managing a quality of the subsequent raw material.

In accordance with another exemplary embodiment, a method for particle size management includes: preparing a raw material; transporting the prepared raw material; sorting the transported raw material into small particles and large particles greater than the small particles; obtaining an image by photographing the large particles; analyzing a particle size distribution of the large particles from the photographed image; and calculating a particle size distribution of the raw material by using the particle size distribution of the large particles.

The transporting of the prepared raw material may include transporting the prepared raw material at a speed in a range of 0.1 m/s to 0.15 m/s.

The sorting of the transported raw material into the small particles and the large particles greater than the small particles may include suctioning the small particles from a top surface of the raw material and retaining the large particles, the obtaining of the image may include obtaining an image of the large particles from which the small particles are separated at the top surface of the raw material, and, after the obtaining of the image, discharging the separated small particles onto the large particles disposed on the top surface of the raw material.

The analyzing of the particle size distribution of the large particles from the photographed image may include: deriving an area of the large particles from the image of the large particles and sorting the large particles into different sizes for each area; calculating a total area ratio in the photographed image for each sorted large particle; and converting the total area ratio calculated for each sorted large particle into a weight ratio.

The sorting of the large particles into the different sizes for each area may include sorting the sorted large particles into a plurality of groups according to the sizes. The calculating of the total area ratio and the converting of the total area ratio into the weight ratio may be performed for each of the sorted groups.

The calculating of the particle size distribution of the raw material by using the particle size distribution of the large particles may include: calculating a weight ration of the small particles sorted during the converting of the total area ratio calculated for each sorted large particle into the weight ratio; and calculating a particle size distribution of the entire raw material by using the weight ratio for each large particle and the weight ratio for each small particle.

The converting of the total area ratio calculated for each large particle into the weight ratio may include predicting a weight ratio for each sorted large particle according to the total area ratio calculated for each large particle by using a particle size distribution model of the raw material created based on data learned in advance by artificial intelligence, and replacing the total area ratio calculated for each large particle with the predicted weight ratio. The calculating of the weight ratio of the separated small particles may include: calculating a weight ratio of the large particles by adding the predicted weight ratio for each large particle; and using a weight ratio that becomes 100 % when added with the weight ratio of the large particles as a weight ratio of the small particles.

The preparing of the raw material may include preparing a plurality of raw materials having different hardgrove indices (HGI), and the transporting of the prepared raw material may include transporting each of the plurality of raw materials. Here, sorting the transported raw material into small particles and large particles greater than the small particles, obtaining an image by photographing the large particles, analyzing a particle size distribution of the large particles from the photographed image, and calculating a particle size distribution of the raw material by using the particle size distribution of the large particles may be performed on at least one selected from among the plurality of raw materials.

The method may further include, after the calculating of the particle size distribution of the raw material is performed on the selected raw material, applying the particle size distribution of the selected raw material to all of the plurality of raw materials by using the hardgrove index (HGI) of each of the plurality of raw materials.

The preparing of the raw material may include: crushing the raw material; and, after the calculating of the particle size distribution of the raw material, using the calculated particle size distribution of the raw material for preparing a subsequent raw material.

The using of the preparing of the subsequent raw material may include: comparing the calculated particle size distribution of the raw material with a predetermined reference particle size distribution; controlling a crushing condition of the subsequent raw material according to a comparison result; and crushing the subsequent raw material under the controlled crushing condition.

### ADVANTAGEOUS EFFECTS

In accordance with an exemplary embodiment, the particle size distribution of the raw material may be quickly analyzed in real time before mixing the raw material by photographing the raw material while transporting the raw material to obtain the image of the raw material and analyzing the particle size distribution of the raw material from the obtained image. Furthermore, the large particles may be photographed in the state in which the small particles are sorted from the transported raw material, and the large particles are remained before photographing the raw material. Thus, the boundaries of the particles of the raw material may be clearly revealed, and the clear image may be obtained. Accordingly, the particle size distribution of raw material may be accurately analyzed from the clear image.

Also, based on the accurate analysis results of the particle size distribution, the particle size distribution of the subsequent raw material may be smoothly managed. Thus, while repeating the receiving and processing of the raw material, the particle size distribution of the raw material to be processed may be continuously managed to have the desired particle size distribution, thereby always maintaining the quality of the processed raw materials at the desired quality level. Thus, the quality deviation of the coke produced in the coke production process that is the subsequent process using the raw material may be minimized.

### BRIEF DESCRIPTION OF THE DRAWINGS

FIG. 1 is a view for explaining a raw material processing facility including a device for particle size management in accordance with an exemplary embodiment.
FIGS. 2 and 3 are a side view and a plan view of the device for particle size management in accordance with an exemplary embodiment.
FIG. 4 is a schematic view of a sorting unit in accordance with an exemplary embodiment.
FIG. 5 is a photograph for explaining an operation of the sorting unit in accordance with an exemplary embodiment.
FIG. 6 is a photograph and a graph for explaining an analysis unit in accordance with an exemplary embodiment.
FIG. 7 is a flowchart representing a method for particle size management in accordance with an exemplary embodiment.

### MODE FOR CARRYING OUT THE INVENTION

Hereinafter, exemplary embodiments will be described in detail with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. In the figures, the dimensions of layers and regions are exaggerated for clarity of illustration. Like reference numerals refer to like elements throughout.

The present disclosure relates to a device and a method for particle size management. Hereinafter, an exemplary embodiment will be described in detail by using a case in which a device and a method for particle size management is applied to a raw material processing facility that processes a raw material for producing coke in an iron industry. Alternatively, the device and the method for particle size management in accordance with an exemplary embodiment may be applied to various raw material processing facilities that process various raw materials. For example, the device and the method for particle size management in accordance with an exemplary embodiment may also be applied to a raw material processing facility that processes iron ore and limestone.

The device and the method for particle size management in accordance with an exemplary embodiment may accurately analyze and manage the particle size of raw materials. Alternatively, the device and the method for particle size management in accordance with an exemplary embodiment may be used only to accurately analyze the particle size of raw materials. In this case, the device and the method for particle size management in accordance with an exemplary embodiment may be referred to as, for example, a particle size analysis device and method.

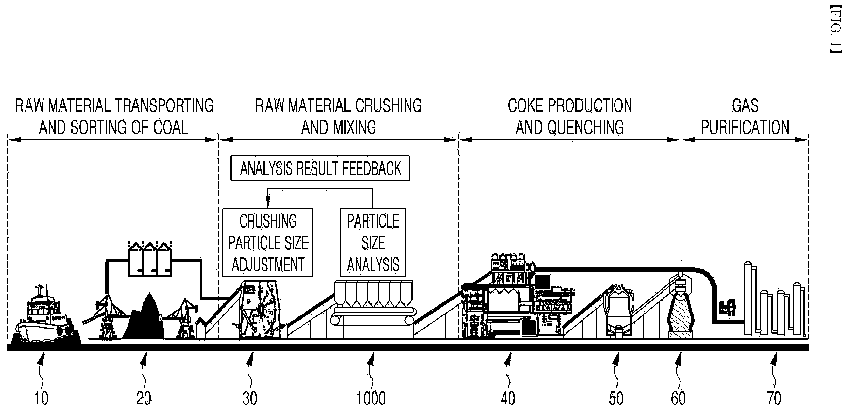

FIG. 1 is a view for explaining a raw material processing facility to which the device and the method for particle size management in accordance with an exemplary embodiment are applied.

The raw material processing facility in accordance with an exemplary embodiment will be simply described with reference to FIG. 1.

The raw material processing facility in accordance with an exemplary embodiment may process a raw material for producing coke. For example, the raw material may be coal. Here, the coal may be referred in various manners such as single coal and raw coal. The raw material may have various types, e.g., the types of coal. For example, the raw material processing facility may process 6 to 12 types of coal. Alternatively, the number of the types of coal may be diverse. Here, the raw materials may have different properties such as cohesiveness, fluidity, and crushability depending on the types of coal.

The raw materials may be transported by, e.g., a ship 10 and stored in a yard for each type of coal. Here, a raw material coal preparation facility 20 may be installed in the yard. Foreign substances such as gangue in the raw material may be removed while the raw material passes through the raw material coal facility 20. Thereafter, the raw material may be supplied to the raw material processing facility, and then blended coal may be produced by crushing and mixing the raw material in the raw material processing facility.

The raw material processing facility may be a raw material processing facility for producing the blended coal by crushing the raw material for each coal type and mixing the crushed raw material at a set mixing ratio. The raw material processing facility includes a raw material crushing device 30 and a device 1000 for particle size management (hereinafter, referred to as a particle size management device 1000). Here, the particle size management device 1000 may be also referred to as a raw material mixing device. That is, the processing may represent crushing and mixing of the raw material. Alternatively, the raw material processing facility may have various processing methods.

The raw material crushing device 30 may be an impact type raw material crushing device 30. The raw material crushing device 30 may have various crushing methods. For example, the raw material crushing device 30 may include a hammer crusher. Here, the hammer crusher may include a rotating shaft, a hammer, and a repulsion plate. The hammer crusher may drop the raw material between the hammer and the replusion plate while rotating the hammer around the rotating shaft and crush the raw material by hitting the raw material with the hammer and the replusion plate. On the other hand, crushability of the raw materials may be varied depending on the types of the coal. Also, a particle size distribution of the crushed raw materials may be varied depending on the crushability of the raw materials.

The raw material crushing device 30 may alternately receive raw materials for each type of the coal. Thus, the raw material crushing device 30 may crush the raw materials for each type of the coal. Also, the raw materials alternately crushed for each type of the coal in the raw material crushing device 30 may be supplied to the particle size management device 1000 and produced into the blended coal.

While crushing the raw materials, the hammer and the replusion plate may be worn, and a gap between the hammer and the replusion plate may be varied due to impact. Accordingly, during the crushing of the raw materials, the particle size distribution of the raw materials to be crushed may be varied.

Also, when the particle size distribution of the raw materials is different, raw materials in the blended coal may not be evenly mixed while the particle size management device 1000 produces blended coal by mixing crushed raw materials for each type of coal at a set mixing ratio. When the raw materials are not evenly mixed, a quality of the coke produced may be degraded while coke is produced by drying the blended coal at a high temperature in a coke production facility that is a subsequent facility of the raw material processing facility.

Thus, in accordance with an exemplary embodiment, the particle size management device 1000 may alternately receive a crushed raw material for each type of coal from the raw material crushing device 30 and analyze a particle size distribution of the raw material while blending the same to produce blended coal. An analyzed result may be fed back to the raw material crushing device 30, and a quality of a subsequent raw material may be managed by controlling a crushing condition of the subsequent raw material to be supplied from the raw material crushing device 30 to the particle size management device 1000.

Here, the raw material crushing device 30 may control an operating condition of the hammer crusher according to the crushing condition of the raw material. For example, a speed at which the hammer rotates and a gap between the hammer and the replusion plate may be controlled. Accordingly, the particle size of the crushed raw material may be adjusted. Thus, the particle size distribution of the subsequent raw material supplied to the particle size management device 1000 after being crushed in the raw material crushing device 30 may be managed to a desired particle size distribution.

On the other hand, the blended coal produced in the raw material processing facilities 30 and 1000 may be supplied to coke manufacturing facilities 40 and 50. Each of the coke manufacturing facilities 40 and 50 may include a coke oven 40 and a dry quenching chamber 50. The blended coal may be charged into the coke oven 40, carbonized at a high temperature, and produced into hot coke. The produced hot coke may be supplied to the dry quenching chamber 50 and quenched to be the coke. The produced coke may be charged into a molten iron manufacturing facility, such as a blast furnace facility, to produce molten iron On the other hand, a coke oven gas generated in the coke manufacturing facilities 40 and 50 may be purified after being supplied to the gas purification facility 70 and then supplied to the coke manufacturing facilities 40 and 50 and the blast furnace facility 60 to be used as fuel.

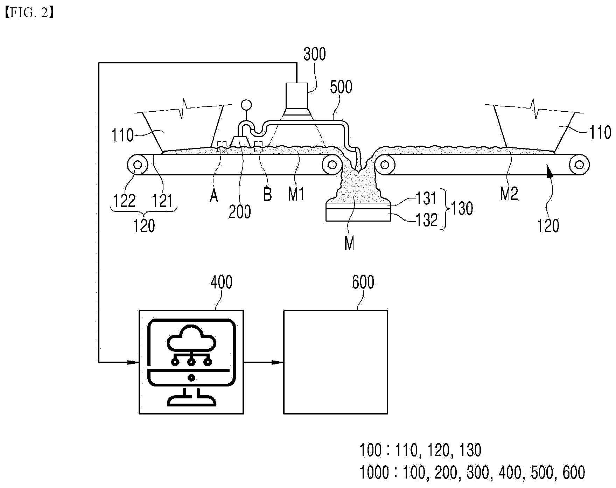

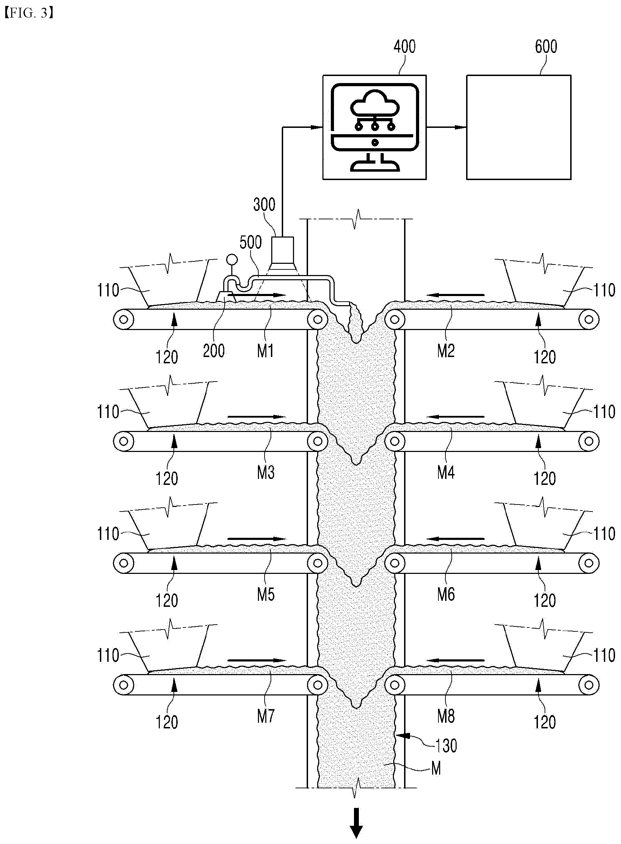

FIGS. 2 and 3 are a side view and a plan view of a particle size management device in accordance with an exemplary embodiment.

The particle size management device 1000 in accordance with an exemplary embodiment will be described in detail with reference to FIGS. 2 and 3.

The particle size management device 1000 in accordance with an exemplary embodiment may receive crushed raw materials for each type of coal and produce a mixed raw material therefrom, accurately analyze the particle size of the supplied raw material, and adjust a supply condition of the subsequent raw material to be supplied.

Referring to FIGS. 2 and 3, the particle size management device 1000 in accordance with an exemplary embodiment includes a transport unit 100 for transporting raw materials M1, M2, M3, M4, M5, M6, M7, and M8, a sorting unit 200 for sorting small particles from the raw materials and retaining large particles greater than the small particles, a photographing unit 300 arranged to face the transport unit 100 to obtain an image of the large particles, and an analysis unit 400 for analyzing a particle size distribution of the raw materials from the obtained image.

Also, the particle size management device 1000 may include a return unit 500 connected to the sorting unit 200 and disposed on the transport unit 100 to return the sorted small particles to the large particles from which the image is obtained and a management unit 600 for controlling a supply condition of a subsequent raw material to be supplied to the transport unit 100 by using the particle size distribution analyzed by the analysis unit 400. Here, the supply condition may be a crushing condition.

The raw material that is crushed in the raw material crushing device 30 and then supplied to the particle size management device 1000 may be, for example, coal. The raw material may consist of a plurality of particles. Here, the particles of the raw material may be divided into small particles and large particles.

Specifically, among the particles of raw materials, particles each having a size greater than 0 and less than 3 mm are referred to as small particles, and particles each having a size greater than or equal to 3 mm are referred to as large particles. More specifically, a size range of the large particles may be 3 mm or more and 15 mm or less.

The raw material may contain a certain amount of moisture, and the moisture may cause agglomeration between particles of the raw material. When a particle size is greater than 0 and less than 3 mm, the particles may be actively agglomerated by moisture. For example, a plurality of particles each having a size less than 3 mm may be agglomerated into one particle having a size of 3 mm or more. Thus, the size of particle may be distorted in the photographed image.

Also, the color of the raw material is generally black, and since the black has a property of absorbing light, the particles are difficult to be distinguished. Here, when the particle size is less than 3 mm, it is extremely difficult to distinguish boundaries between particles in the photographed image. When a plurality of particles each having a size less than 3 mm are disposed around a particle having a size of 3 mm or more, the particles having the size of 3 mm or more may be shown larger than an actual size thereof. Thus, the size of particle may be exaggerated in the photographed image.

When photographing the raw material, particles having a size greater than 0 and less than 3 mm, which is a size that may be exaggerated or distorted, may be defined as small particles. Thus, the raw material may be photographed after removing the small particles from the large particles to prevent exaggeration and distortion of the size of the particle in the photographed image and obtain a clear image in which the size of the particle is accurately photographed.

On the other hand, the size range of the large particles may be subdivided into multiple sections. Here, a plurality of sections may include a first large particle section of 3 mm to less than 5 mm, a second large particle section of 5 mm to less than 10 mm, and a third large particle section of 10 mm to 15 mm. The plurality of sections may be used to analyze the particle size distribution of the raw materials.

The transport unit 100 that is for transporting and mixing raw materials may include a hopper 110 for receiving the raw materials and transporters 120 and 130 having a belt 121 for continuously transporting raw materials continuously discharged from the hopper 110.

The hopper 110 may receive and store the raw materials from the raw material crushing device 30 and discharge the stored raw materials to the transporter 120 at a predetermined discharge rate. A plurality of hoppers 110 may be provided to receive a plurality of types of raw materials, respectively. Here, the plurality of types may represent a plurality of types of coal. Also, the number of hoppers 110 may be equal to the number of types of coal of the raw materials. For example, when the number of types of coal of the raw material is 8, the number of plurality of hoppers 110 may be also 8. Accordingly, the plurality of hoppers 110 may store and discharge different types of coal. For example, when the raw material includes strong coal and fine coal, the hopper 110 for storing the strong coal and the hopper 110 for storing the fine coal may be different hoppers 110. On the other hand, at least one hopper 110 among the plurality of hoppers 110 may be dedicated to raw materials in which coal types are frequently changed and alternately store the raw materials. Also, when the raw material includes only one type of coal, the number of hoppers 110 may be also one.

The plurality of hoppers 110 may be disposed on both sides in a width direction of the second transporter 130 that will be described later and arranged in a longitudinal direction of the second transporter 130. Here, the width direction and the longitudinal direction may cross each other in each of upward and downward directions. The plurality of hoppers 110 may be connected to a plurality of raw material crushing devices 30, respectively.

Each of the hoppers 110 may have a storage space in which the raw materials are stored and an outlet formed at a lower portion thereof. Also, a feeder (not shown) for controlling a discharge amount of the raw materials may be provided at the outlet of each of the hoppers 110. The raw material may have a different discharge amount depending on the types of coal, and each hopper 110 may discharge the raw material at a predetermined discharge amount by operating the feeder provided in each hopper according to the predetermined discharge amount of the raw material stored in the corresponding hopper. Here, the feeder may discharge the raw material so that a surface of a upper portion of the raw material discharged to the first transporter 120 that will be described later is to be flat. On the other hand, the surface of the upper portion of the raw material may be referred to as a top surface of the raw material.

The transporters 120 and 130 may transport the raw materials discharged from the plurality of hoppers 110, weigh a discharge amount of the raw materials, and mix the raw materials with the measured discharge amount at a set mixing ratio. Also, the transporters 120 and 130 may supply mixed raw materials, such as blended coal, which are produced by mixing raw materials of a plurality of types of coal at a predetermined mixing ratio, to the coke oven 40. Each of the transporters 120 and 130 may also be referred to as a continuous weighing feeder (CWF).

The transporters 120 and 130 may connect the plurality of hoppers 110 and the coke oven 40. Also, the transporter 120 may include a plurality of first transporters 120 connected to hoppers 110, respectively, and a second transporter 130 connected to the plurality of first transporters 120. On the other hand, when the raw material includes only one type of coal and the number of hoppers 110 is one, the transporter 120 may include only the first transporter 120.

The plurality of first transporters 120 serve to transport and measure the raw materials discharged for each type of coal. The number of first transporters 120 may be equal to the number of hoppers 110. Each of the plurality of first transporters 120 may be installed below the hopper 110 in which the raw material to be transported and measured is stored. Also, the plurality of first transporters 120 may extend toward the second transporter 130. Here, a direction in which the plurality of first transporters 120 extend may be parallel to a width direction of the second transporters 130.

The first transporter 120 may include a plurality of rollers 122 arranged in the direction in which the first transporter 120 extends and a belt 121 surrounding the plurality of rollers 122 so that the first transporter 120 travels in the direction in which the first transporter 120 extends. Also, the first transporter 120 may include a load cell (not shown) installed to be connected to the belt 121 between the hopper 110 and the sorting unit 200 to measure a discharge amount of raw material discharged to the belt 121. Here, the discharge amount may represent, for example, a weight of a raw material discharged per hour. The first transporter 120 may compare the discharge amount of the raw material measured in the load cell with a predetermined discharge amount of the raw material and, when a difference occurs, adjust a speed of the belt 121 to control a supply speed of the raw material from the first transporter 120 to the second transporter 130, thereby adjusting the discharge amount of the raw material of the hopper 110.

On the other hand, the first transporter 120 may compare the discharge amount of the raw material measured in the load cell with a predetermined discharge amount of the corresponding raw material and, when a difference occurs, transmit a difference value to the hopper 110 in which the corresponding raw material is stored. Also, the hopper 110 that receives the difference value may control an operation condition of the feeder disposed at the outlet to adjust the discharge amount of the corresponding raw material.

The speed at which the belt 121 travels may be in a range of 0.1 to 0.15 m/s. Accordingly, the belt 121 may transport the raw material at a speed range of 0.1 to 0.15 m/s. Accordingly, a predetermined discharge amount of the raw material may be smoothly discharged from the hopper 110 to the belt 121, and the photographing unit 300 may obtain a clear image of the raw material by photographing the raw material on the belt 121. That is, when the belt 121 travels at a speed faster than 0.15 m/s, it may be difficult for the load cell to accurately measure the discharge amount of the raw material, and it may be difficult for the photographing unit 300 to smoothly photograph the raw material on the belt 121. Also, when the belt 121 travels at a speed slower than 0.1 m/s, the raw material discharged from the hopper 110 at a set discharge amount may be accumulated on the belt 121 and overflown to the outside of the belt 121.

The second transporter 130 serves to continuously receive and mix the raw materials with measured discharge amounts and mix the raw materials equally according to a mixing ratio. Also, the second transporter 130 serves to transport blended coal produced by mixing the raw materials to the coke oven 40. The second transporter 130 may be disposed below the plurality of first transporters 120. The second transporter 130 may be connected to an end of each of the plurality of first transporters 120. Here, a state of being connected represents that the raw materials may move. That is, the second transporter 130 may be arranged to pass through a drop range of the raw material dropped from the end of each of the plurality of first transporters 120. The second transporter 130 may extend in a direction in which the plurality of first transporters 120 are arranged and have an end connected to the coke oven 40.

The second transporter 130 may have a structure similar to that of the first transporter 120. That is, the second transporter 130 may include a plurality of second rollers 132 arranged in a direction in which the second transporter 130 extends and a second belt that may travel on the plurality of second rollers 132. On the other hand, a speed at which the second belt 131 travels may be greater than or equal to a speed at which the belt 121 travels. Also, the second belt 131 may have a width greater than that of the belt 121.

The sorting unit 200 may sort small particles from the raw material before photographing the raw material and retain large particles greater than the small particles. That is, the sorting unit 200 may sort the small particles and retain the large particles to prevent an image photographed by the photographing unit 300 from being exaggerated and distorted by the small particles. Accordingly, the photographing unit 300 may obtain a high-quality image of the raw material.

The sorting unit 200 may be in contact with the transported raw material or may be disposed on the transporters 120 and 130 to be spaced at a predetermined height from the transported raw material. Here, specifically, the sorting unit 200 may be disposed on the first transporter 120 and be in contact with or spaced apart from a top surface of the raw material on the first transporter 120.

A method by which the sorting unit 200 sorts the small particles and retains the large particles may be various. For example, the sorting unit 200 may use suction to separate the small particles on the top surface of the raw material from the raw material and retain the large particles on the top surface of the raw material. Here, sorting may represent separation from the raw material on the first transporter 120, and retaining may represent remaining on the first transporter 120. The small particles may be removed from the raw material from the top surface of the raw material by the sorting unit 200 and collected into the sorting unit 200, and as a result, the large particles may be remained on the top surface of the raw material.

Also, the sorting unit 200 may use sinking to sink the small particles on the top surface of the raw material relative to the large particles and allow the large particles to be remained on the top surface of the raw material. Also, the sorting unit 200 may use dropping to allow the small particles on the top surface of the raw material to roll down along the top surface of the raw material and retain the large particles on the top surface of the raw material.

Hereinafter, an exemplary embodiment will be described based on a feature in which the sorting unit 200 uses suction to retain the large particles on the top surface of the raw material.

On the other hand, the sorting unit 200 may be disposed at a side of the plurality of first transporters 120. Here, the number of selection units 200 may be one or more. Also, the sorting unit 200 may be disposed at a side of one or more first transporters 120 selected from among the plurality of first transporters 120. For example, when the number of sorting units 200 is three, the three sorting units 200 may be disposed at sides of the three selected transporters 120, respectively, which are selected from among the plurality of first transporters 120. Also, when the number of sorting units 200 is one, the sorting unit 200 may be disposed at a side of one transporter 120 selected from among the plurality of first transporters 120. Alternatively, the number of sorting units 200 may be the same as that of the plurality of first transporters 120.

A reference for selecting the first transporter 120 on which the sorting unit 200 is disposed may be various. For example, based on cohesiveness of the raw material transported by the first transporter 120, the first transporter 120 for transporting strong coal and the first transporter 120 for transporting fine coal may be selected, and two sorting units 200 may be disposed on the selected transporter 120, respectively. Also, a reference for selecting the first transporter 120 on which the sorting unit 200 is disposed may be one or more. For example, based on the cohesiveness of the raw material, two first transporters 120 may be selected, and based on a frequency of variation of types of coal of the raw material, the first transporter 120 for transporting a raw material in which the types of coal are frequently changed may be selected. Thus, a total of three first transporters 120 may be selected.

On the other hand, the sorting unit 200 may be movably installed. For example, a transporter such as a crane (not shown) or a rail (not shown) may be installed at a side of the plurality of first transporters 120, and the sorting unit 200 may be movably installed on the transporters. Accordingly, when the reference for selecting the first transporter 120 is changed, a position of the sorting unit 200 may be changed. On the other hand, the photographing unit 300 and the return unit 500 may also be movably installed to be changed to the same position as the sorting unit 200. Alternatively, all of the sorting units 200 may be disposed on the plurality of first transporters 120, and only the sorting unit 200 disposed on the selected first transporters 120 may be selectively operated.

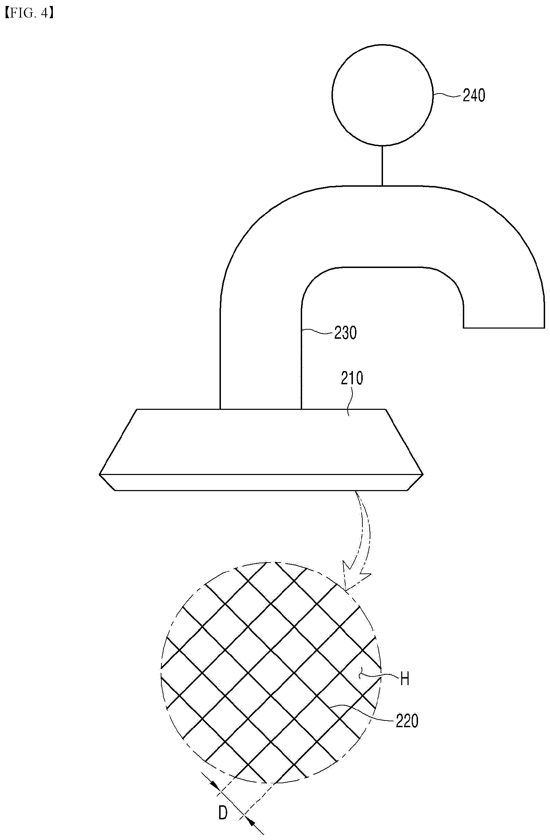

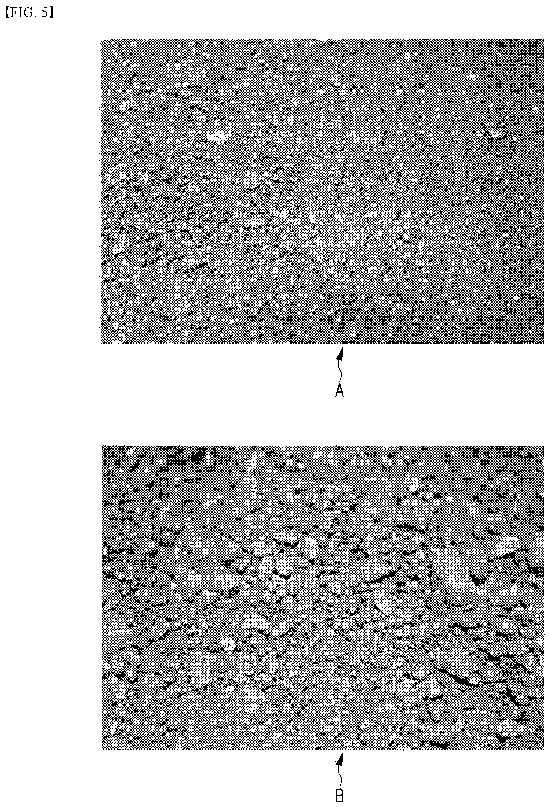

FIG. 4 is a schematic view of the sorting unit in accordance with an exemplary embodiment, and FIG. 5 is a photograph for explaining an operation of the sorting unit in accordance with an exemplary embodiment. Here, "A" of FIG. 5 is a photograph of a raw material passing through portion "A" in FIG. 2, and "B" of FIG. 5 is a photograph of a raw material passing through portion "B" in FIG. 2.

Referring to FIGS. 3 and 4, the sorting unit 200 that suctions the small particles on the top surface of the raw material using suctioning may include a suctioner 210 having an opened surface facing the transporter 100 to suction the small particles, a suction pipe 230 for connecting the suctioner 210 to the return unit 500, and a suction pump 240 connected to the suctioner 210. Here, the sorting unit 200 may further include a sieve 220 having a plurality of openings H for suctioning the small particles from the raw material.

The suctioner 210 that provides a suction space above the top surface of the raw material to form a negative pressure for suctioning the small particles may be spaced upward from the belt 121 of the first transporter 120 and disposed between the hopper 110 and the photographing unit 300. The suctioner 210 may be continuously disposed in the width direction of the belt 121 between 10% and 90% of the width of the belt 121 for transporting the raw materials. That is, the suctioner 210 may be spaced apart from both sides of the belt 121 in the width direction of the belt 121 and extend to cross the belt 121 between both edges of the belt 121 in the width direction. Accordingly, unnecessary external air existing around the both sides of the belt 121 may be restricted from being introduced into the suctioner 210.

The suction pipe 230 serves to introduce the small particles of the raw material suctioned into the suctioner 210 into the return unit 500. The suction pipe 230 may have one end connected to an upper portion of the suctioner 210 and the other end connected to the return unit 500. Also, the suction pump 240 may be mounted to one side of the suction pipe 230.

The suction pump 240 that forms negative pressure in the suctioner 210 through the suction pipe 230 may form negative pressure in the suction pipe 230 at a predetermined pressure lower than atmospheric pressure to form negative pressure in the suctioner 210. Also, the suction pump 240 may form a flow inside the suction pipe 230 to transport the small particles from one end to the other end of the suction pipe 230. Accordingly, the small particles suctioned by the suctioner 210 may pass through the suction pipe 230 and be introduced into the return unit 500.

The sieve 220 may be mounted to an opening at a lower portion of the suctioner 210. The sieve 220 may have a plurality of openings H, and each of the openings H may have a size greater than 0 to less than 3 mm. Accordingly, the small particles each having a size greater than 0 to less than 3 mm may be suctioned into the suctioner 210 through the opening H of the sieve 220, and large particles greater than the small particles may be filtered by the sieve 200 and remained on the top surface of the raw material. On the other hand, the sieve 220 may be continuously disposed in the width direction of the belt 121 between 10% and 90% of the width of the belt 121 for transporting the raw materials.

When the sorting unit 200 does not include the sieve 220, only the small particles may be suctioned into the suction pump 240 from the top surface of the raw material and the large particles may be remained by adjusting a magnitude of the negative pressure in the suction pump 210.

On the other hand, the sieve 220 may be vibrated, or moisture may be supplied to a surface of the sieve 220 for lubrication in order to prevent the particles of the raw material from being attached to the surface of the sieve 220 to clog the opening H.

Referring to FIG. 5, in the image A obtained by photographing the top surface of the raw material before passing through a lower side of the sorting unit 200, it may be known that boundaries between particles are hardly distinguished due to small particles. Also, in the image B obtained by photographing the top surface of the raw material after passing through the lower side of the sorting unit 200, it may be known that the boundaries between the particles are clearly distinguished because the small particles are removed from the top surface of the raw material.

That is, the sorting unit 200 may expose the large particles on the top surface of the raw material before photographing the raw material to allow the analysis unit 400 to easily identify individual particles of the raw material in the photographed image of the top surface of the raw material.

Hereinafter, a modified exemplary embodiment will be described in a state in which the sorting unit 200 uses sinking to retain the large particles on the top surface of the raw material.

In the modified exemplary embodiment, the sorting unit 200 may include a first sorter (not shown) for sinking the small particles relative to the large particles from the top surface of the raw material. The first sorter may include a plurality of hook members that are spaced apart from each other along a width of the first transporter 120. The plurality of hook members may be arranged with bent portions facing downward, and inserted into the raw material at a predetermined depth from the top surface of the raw material. A furrow may be formed between the plurality of hook members. Here, the large particles may be seated on the furrow, and the small particles may be collected between the furrows. For example, the small particles may sink between adjacent hook members, and some may be quickly collected between furrows while others may form a lower portion of the furrow. Here, the large particles may be raised to a predetermined height along a surface of the hook member and then dropped due to an own weight thereof instead of being quickly sunken between the adjacent hook members. Some of the large particles may be seated on the small particles between the furrows, and the rest may form an upper portion of the furrow.

Accordingly, the small particles may sink to a relatively low height compared to the large particles, and the large particles may be raised to a higher height than the small particles.

Hereinafter, another modified exemplary embodiment will be described with reference to a state in which the sorting unit 200 uses dropping to retain the large particles on the top surface of the raw material.

In another modified exemplary embodiment, the sorting unit 200 may include a second sorter (not shown) for spacing the small particles apart from the large particles by rolling the small particles down along the top surface of the raw material. The second sorter may include an inclined surface former. The inclined surface former may be disposed below the first transporter 120 at a side of the hopper 110 and support a bottom surface of the belt 121 of the first transporter 120 to be inclined in the width direction. Accordingly, the raw material may be seated to be inclined at a predetermined angle on the belt 121 in the width direction in an area on which the second sorter is disposed, and as a result, the top surface of the raw material may be inclined in the width direction to form an inclined surface. In this case, while the belt 120 moves, the small particles having a relatively light weight may roll down the inclined surface and be separated from the large particles, and the large particles having a relatively heavy weight may maintain a position on the inclined surface. That is, as the small particles are dropped from the top surface of the raw material, the small particles may be separated from the inclined surface of the top surface of the raw material and spaced apart from the large particles, and the large particles may be remained on the top surface of the raw material. Hereinafter, an exemplary embodiment will be described.

Referring to FIG. 2, the photographing unit 300 may obtain an image of the top surface of the raw material, specifically, an image of the large particles on the top surface of the raw material. Also, the photographing unit 300 may obtain an image of the large particles by continuously or periodically photographing the top surface of the raw material from which the small particles are removed, and transmit the obtained image of the large particles to the analysis unit 400.

The photographing unit 300 may include various types of cameras selected in a range having a resolution level capable of distinguishing the large particles each having a size of 3 mm or more when photographing the raw material. The photographing unit 300 may be arranged to face the transport unit 100. Specifically, the photographing unit 300 may be disposed at a side of the plurality of first transporters 120. More specifically, the photographing unit 300 may be disposed above the first transporter 120 to face the first transporter 120 on which the sorting unit 200 is disposed among the plurality of first transporters 120. Also, the photographing unit 300 may be disposed to face a lower side of the sorting unit 200 based on a direction in which the belt 121 transports the raw material. That is, the photographing unit 300 may be spaced apart from the sorting unit 200 in a direction in which the raw material moves. On the other hand, a photographing area of the photographing unit 300 may include the entire width of the belt 121 for transporting the raw materials. Thus, the photographing unit 300 may photograph the raw material passing through the lower side of the photographing unit 300 and transported by the belt 121 without exception in the width direction of the belt 121 and obtain an image of the top surface of the raw material such as an image of the large particles from which the small particles are separated.

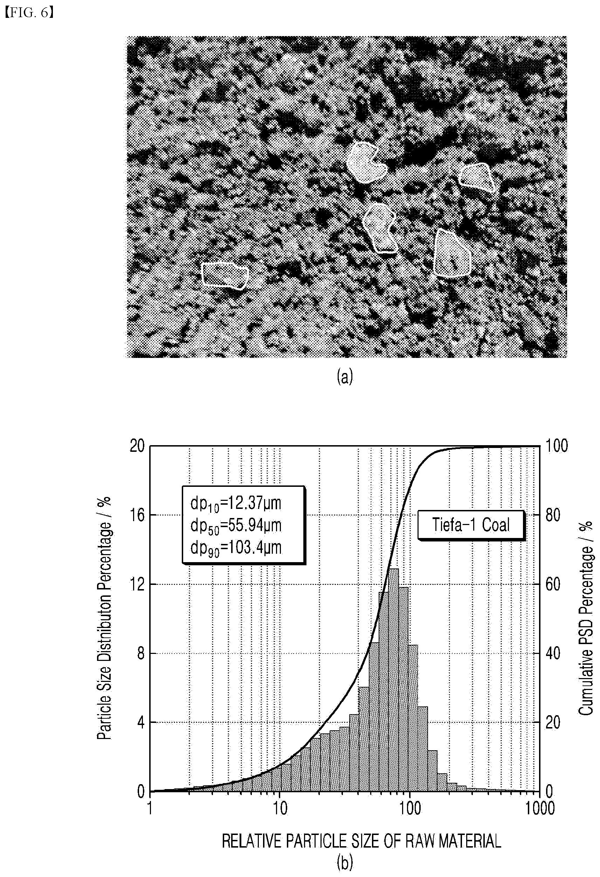

(a) and (b) of FIG. 6 are a photograph and a graph for explaining the analysis unit in accordance with an exemplary embodiment.

Referring to FIGS. 2 and 6, the analysis unit 400 may analyze the particle size distribution by identifying individual large particles in the image photographed by the photographing unit 300 and calculate the particle size distribution of the entire raw material by using the particle size distribution of the analyzed large particles. Also, the analysis unit 400 may be connected to the photographing unit 300 and the management unit 600.

The analysis unit 400 may derive an area of the identified large particles, sort the large particles into different sizes for each area, and obtain a total area ratio of the image obtained for each sorted large particle. Here, the analysis unit 400 may use artificial intelligence.

For example, the analysis unit 400 may use the deep learning algorithm as artificial intelligence (AI), e.g., the U-Net algorithm. Here, the U-Net algorithm is an example of the deep learning algorithm for processing images. However, the exemplary embodiment is not limited to the type of algorithm. That is, the analysis unit 400 may use various algorithms such as FCN, DeepLab V3(+), Atrous Convolution, spatial pyramid pooling, encoder-decoder, and depthwise separable convolution within a range in which the sematic segmentation technique may be applied.

Alternatively, the analysis unit 400 may use image analysis techniques such as Entropy, Entrance Surface Dose, and Mutual information in addition to artificial intelligence (AI)-based image analysis techniques. Also, the analysis unit 400 may use image analysis techniques such as Entropy, Entrance Surface Dose, and Mutual information in addition to the artificial intelligence (AI)-based image analysis techniques.

Also, the analysis unit 400 may convert the total area ratio obtained for each sorted large particles into a weight ratio based on data learned in advance by artificial intelligence, and analyze the weight ratio for each sorted large particles as the particle size distribution of the large particles. Also, the analysis unit 400 may calculate the weight ratio of the separated small particles by using the weight ratio for each large particle and calculate the particle size distribution of the entire raw material by using the weight ratio for each large particle and the weight ratio for each small particle.

For example, in (b) of FIG. 6, the particle size distribution of the entire raw material obtained by the analysis unit 400 is exemplarily shown in a graph. A horizontal axis of the graph represents a relative particle size of the raw material. In the graph, 1 corresponds to a smallest particle size of the raw material, and 1000 corresponds to a largest particle size of the raw material. A left vertical axis of the graph corresponds to a bar graph and represents a weight distribution for each particle size of the raw material. A right vertical axis of the graph corresponds to a line graph and represents a cumulative fraction of the weight distribution for each particle size of the raw material. On the other hand, as shown in the graph, the particle size distribution of the raw material may have normal distribution characteristics.

As illustrated in (b) of FIG. 6, the analysis unit 400 may calculate the particle size distribution of the entire raw material from the image photographed by the photographing unit 300 based on the data learned in advance by artificial intelligence. That is, the particle size distribution of the raw material calculated by the analysis unit 400 may be a distribution of a weight for each size of the raw material. On the other hand, in order to avoid duplication of explanation, a specific method by which the analysis unit 400 calculates the particle size distribution of the entire raw material will be described in detail below while explaining the method for particle size management in accordance with an exemplary embodiment.

On the other hand, the analysis unit 400 may sort the individually identified large particles into a plurality of groups according to sizes, analyze a weight ratio of the large particles for each group as the particle size distribution of the large particles, and use the weight ratio of the large particles for each group and the weight ratio of the small particles to calculate the particle size distribution of the entire raw material. Also, the analysis unit 400 may apply the particle size distribution obtained from the raw material transported to the selected first transporter 120 to all of the plurality of raw materials by using crushing characteristics of the plurality of raw materials. A description on this will be described in detail below when explaining the method for particle size management in accordance with an exemplary embodiment.

Referring to FIG. 2, the return unit 500 serves to return the small particles to the large particles from which the image is obtained. That is, based on a direction in which the raw materials are transported, the return unit 500 may receive the small particles suctioned from the raw materials to the sorting unit 200 at an upstream side of the photographing unit 300 and return to the raw materials at a downstream side of the photographing unit 300.

That is, the return unit 500 may return the small particles sorted from the raw material before photographing the raw material onto the raw material after photographing the raw material to prevent a total supply amount of the raw material to be supplied onto the second transporter 130 for producing a mixed raw material from being reduced.

The return unit 500 may be disposed on the transport unit 100. Specifically, the return unit 500 may be disposed on the first transporter 120 on which the sorting unit 200 is disposed among the plurality of first transporters 120. The number of return units 500 may be plural. Here, the number of return units 500 may be equal to the number of sorting units 200. The return unit 500 may be connected to the sorting unit 200. Here, the return unit 500 may have an inlet connected to the sorting unit 200 and an outlet arranged at the lower side of the photographing unit 300 based on a direction in which raw materials are transported. Here, the inlet may be an opening through which the raw material passes first, and the outlet may be an opening through which the raw material passes later. The inlet of the return unit 500 may be connected to the suction pipe 230 of the sorting unit 200. Also, the outlet of the return unit 500 may be opened downward at an end of the first transporter 120 on which the return unit 500 is disposed. The small particles may be introduced into the inlet of the return unit 500 from the sorting unit 200, pass through a passage connecting the inlet and outlet of the return unit 500, and be discharged from the outlet of the return unit 500 to be returned onto the large particles of the raw material.

The management unit 600 may adjust a supply condition of a subsequent raw material to be supplied to the transport unit 100 by using the particle size distribution analyzed by the analysis unit 400. The management unit 600 may be connected to the analysis unit 400 and a controller of the raw material crushing device 30.

That is, the management unit 600 may receive an analysis result from the analysis unit 400, compare the particle size distribution of the entire raw material analyzed by the analysis unit 400 with a preset reference particle size distribution, and according to a comparison result, control the controller of the raw material crushing device 30, and control a crushing condition of the subsequent raw material to be supplied to the transport unit, thereby controlling a quality of the subsequent raw material.

When the particle size distribution analyzed by the analysis unit 400 is at least partially different from a preset reference particle size distribution, the management unit 600 may adjust a crushing condition of the raw material as a supply condition of the subsequent raw materials to be supplied to the transport unit 100. For example, in the particle size distribution analyzed by the analysis unit 400, when the particle size distribution of the small particles is greater than the reference particle size distribution for the small particles, a gap between the hammer and the repulsion plate, as the crushing condition of the raw material, may be increased to reduce an amount of the small particles and increase an amount of the large particles when crushing the subsequent raw material. Also, the management unit 600 may transmit the adjusted crushing condition of the raw material to the controller of the raw material crushing device 30. Accordingly, the raw material crushing device 30 may operate the controller according to the received crushing condition of the raw material to increase the gap between the hammer and the replusion plate by a predetermined gap, thereby reducing the amount of the small particles in the crushed raw material and increasing the amount of large particles.

Hereinafter, the method for particle size management (hereinafter, referred to as a particle size management method) in accordance with an exemplary embodiment will be described in detail. Here, contents that overlaps the above-described description of the particle size management device in accordance with an exemplary embodiment will be briefly described or omitted.

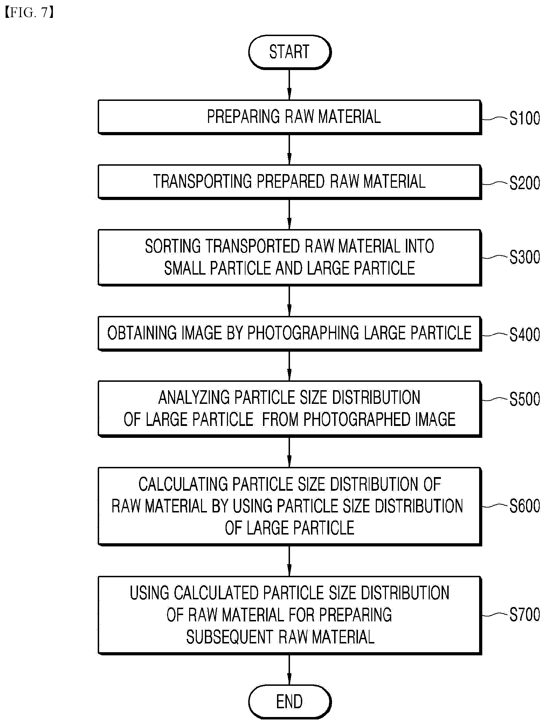

FIG. 7 is a flowchart representing the particle size management method in accordance with an exemplary embodiment.

Referring to FIGS. 1 to 7, the particle size management method in accordance with an exemplary embodiment includes a process S100 of preparing a raw material, a process S200 of transporting the prepared raw material, a process S300 of sorting the transported raw material into small particles and large particles greater than the small particles, a process S400 of obtaining an image by photographing the large particles, a process S500 of analyzing a particle size distribution of the large particles from the photographed image, and a process S600 of calculating a particle size distribution of the raw material by using the particle size distribution of the large particles.

Also, the particle size management method in accordance with an exemplary embodiment may include a process S700 of using the calculated particle size distribution in a process of preparing a subsequent raw material, after the calculating the particle size distribution of the raw material by using the particle size distribution of the large particles.

The particle size management method in accordance with an exemplary embodiment may accurately analyze and manage the particle size distribution of the raw material. Thus, a mixing ratio of the mixed raw material produced from the raw material may be accurately adjusted to a specified mixing ratio. Furthermore, a quality deviation of the coke produced from the mixed raw material may be minimized.

The raw material may be coal for producing the coke. Also, the raw materials may be provided in plurality. The plurality of raw materials may have different types of coal.

First, the process S100 of preparing the raw materials is performed. The process S100 of preparing the raw material may include preparing a plurality of raw materials with different hard grove indices (HGI). Here, the hardgrove index may be an index indicating whether crushability of coal is good or bad. For example, the hard grove index may be expressed as a number, and the larger the number, the better the crushability. When the raw material is crushed under the same condition, as the hardgrove index value is increased, the raw material may be crushed better, and more small particles may be generated. The raw materials may have different hardgrove indices depending on the types of coal. That is, the plurality of raw materials with different hardgrove indices may represent a plurality of raw materials with different types of coal. The plurality of raw materials may be stored in the yard 20.

Also, the process S100 of preparing the raw material may include a process of crushing a plurality of raw materials by types of coal. Here, the raw materials stored for each type of coal, which are stacked in the yard 20 may be supplied to and crushed by the raw material crushing device 30. Specifically, the plurality of raw materials may be alternately supplied to the raw material crushing device 30 for each type of coal to alternately crush the raw materials for each type of coal, and the plurality of alternately crushed raw materials may be supplied to the particle size management device 1000 and accommodated in a plurality of hoppers 110 for each type of coal.

Thereafter, the process S200 of transporting the prepared raw material is performed. Here, the process S200 of transporting the prepared raw materials may include a process of transporting each of the plurality of raw materials and a process of mixing and transporting the plurality of transported raw materials. That is, while discharging the plurality of raw materials for each type of coal from the plurality of hoppers 110 to the plurality of first transporters 120, the plurality of raw materials may be transported for each type of coal to the plurality of first transporters 120.

Here, when discharging the plurality of raw materials to the plurality of first transporters 120, a top surface of each raw material may become flat on the first transporters 120 from which each raw material is discharged, so that the plurality of raw materials are transferred to the plurality of first transporters 120.

Also, when transporting the plurality of discharged raw materials to the plurality of first transporters 120, respectively, the transported raw materials may be measured to measure a discharge amount of the raw materials, and the measured discharge amount may be compared with a determined discharge amount of each raw material. Accordingly, based on a comparison result, a speed at which the first transporter 120 transports the raw material may be adjusted, or a speed at which the hopper 110 discharges the raw material may be adjusted.

Also, each of the plurality of raw materials may be transported at a speed in a range of 0.1 to 0.15 m/s by the plurality of first transporters 120. When the speed for transporting the raw material is less than 0.1 m/s, the raw material may be hardly discharged to the first transporter 120 by the determined discharge amount of the raw material. Also, when the speed for transporting the raw material is greater than 0.15 m/s, a clear image may be hardly obtained when photographing the raw material being transported. Accordingly, it may be difficult to smoothly perform the process S400 of obtaining the image during a subsequent process.

Thereafter, the plurality of raw materials may be discharged from the first plurality of transporters 120 to the second transporter 130, and the plurality of raw materials may be mixed at a predetermined mixing ratio on the second transporter 130 to produce a mixed raw material such as blended coal. The produced mixed raw material may be continuously transported to the second transporter 130 and supplied to the coke oven 40. On the other hand, while performing the process of transporting the prepared raw materials, the process of preparing the raw materials may be repeated to compensate the raw materials to the plurality of hoppers 110.

While performing the process S200 of transporting the prepared raw materials, for at least one selected from among the plurality of raw materials, the process S300 of sorting the transported raw materials into the small particles and the large particles greater than the small particles, the process S400 of obtaining the image by photographing the large particle, the process S500 of analyzing the particle size distribution of the large particle from the photographed image, and the process S600 of calculating the particle size distribution of the raw material by using the particle size distribution of the large particle may be performed.

When selecting the raw materials, strong coal, fine coal, and non-coking coal may be selected depending on coking properties of the raw material. Also, raw materials of types of coal having a high replacement frequency may be selected. That is, the reference for selecting raw materials may be various, and the number of selected raw materials may be also various. Alternatively, all of the plurality of raw materials may be selected.

Hereinafter, an exemplary embodiment will be described based on a case of selecting one raw material. Alternatively, contents described below may be similarly applied to a case when the number of selected raw materials is two or more and a case when all raw materials are selected.

While performing the process of transporting the prepared raw materials, the process S300 of sorting the transported raw materials into the small particles and the large particles greater than the small particles is performed. Here, the process S300 of sorting the transported raw material into the small particles and the large particles greater than the small particles may include a process of suctioning the small particles from the top surface of the raw material and retaining the large particles. This process may be performed on the raw material transported along the first transporter 120 on first transporter 120. That is, the small particles may be suctioned, and the large particles may be remained on the top surface of the raw material by operating the sorting unit 200 prepared on the first transporter 120.

Here, the small particles each may have a size greater than 0 and less than 3 mm. The large particles each may have a size of 3 mm or more. Specifically, the large particles each may have a size of 3 mm or more and 15 mm or less. A reference for distinguishing the small particles from the large particles may be determined according to a photographing performance of the photographing unit 300 such as a resolution. For example, when photographing the raw material, the photographing unit 300 may select the smallest particle that may be distinguished as a separate particle among the particles of the photographed raw material and use this size as the reference for distinguishing the small particles from the large particles.

That is, the photographing unit 300 may suction and remove the small particles having a size that is difficult to be distinguished from the top surface of the raw material and retain the large particles, so that a clear image may be obtained in a subsequent image obtaining process.

For example, the photograph "A" in FIG. 5 is a photograph of the top surface of the raw material when small particles are not removed from the top surface of the raw material. Also, the photograph "B" in FIG. 5 is a photograph of the remaining large particles after the small particles are removed from the top surface of the raw material. When comparing the two photographs, it may be clearly seen that a clear image of the top surface of the raw material may be obtained by removing the small particles.

While the process of sorting the transported raw materials into the small particles and the larger particles is performed, the process S400 of obtaining images by photographing the large particles is performed. The process S400 of obtaining the image by photographing the large particle may be performed by the photographing unit 300 at a lower side of the sorting unit 200 on the first transporter 120. Also, this process may include obtaining an image of the large particles by photographing the large particles from which the small particles are separated at the top surface of the raw material. Also, after this process, a process of discharging the separated small particles onto the large particles on the top surface of the raw material may be included.

That is, when the raw material is transported along the first transporter 120, and the small particles on the top surface are removed while passing through the sorting unit 200, the top surface of the raw material from which the small particles are removed may be photographed by the photographing unit 300, and the image of the large particles may be obtained. Thereafter, after the raw material is continuously transported along the first transporter 120 and passes through the photographing unit 300, the small particles may be discharged to a corresponding portion of the top surface of the raw material. This process may be performed by a method of operating the return unit 500 connected to the sorting unit 200 to move the small particles suctioned into the sorting unit 200 along the return unit 500 at the same or similar speed as the speed at which the raw material is transported, and then discharging the raw material to the top surface of the raw material at the lower side of the photographing unit 300. Alternatively, the suctioned small particles may be discharged onto the second transporter 130 and returned to the raw material. Through this process, the mixing ratio of the mixed raw materials produced from the raw materials may be prevented from being changed due to the suctioned small particles. On the other hand, the process of obtaining the image by photographing the large particles may be performed continuously or periodically at a predetermined period, and accordingly, subsequent processes may also be performed continuously or periodically.

When the image is obtained by photographing the large particles, the process S500 of analyzing the particle size distribution of the large particles from the photographed image, e.g., the image of the large particles, is performed. This process may include processes of deriving an area of the large particles from the images of the large particles, sorting the large particles into different sizes for each area, calculating a total area ratio of the image photographed for each sorted large particle, and calculating the total area ratio of the image taken for each distinct large particle, and converting the obtained total area ratio into a weight ratio. Here, the processes may be performed in the analysis unit 400.

The process of deriving an area of the large particles from the image of the large particles and soring the large particles into different sizes for each area may be performed. First, the large particles may be individually identified in the image of the large particle. Here, for example, the image of the large particle may be segmented by using the artificial intelligence (AI)-based image analysis technique, and the large particles may be clearly identified as separate particles in the image of the large particle (refer to (a) in FIG. 6).

The U-Net algorithm may be used as an image analysis technique. Alternatively, the types of image analysis techniques may be various. Also, even when the artificial intelligence-based image analysis technique is not used, various image analysis techniques such as Entropy, Entrance Surface Dose, and Mutual Information may be used.

Thereafter, when the large particles are clearly identified as separate particles in the image of the large particles, the area of each identified large particles may be derived. That is, an area of a pixel occupied by each large particle identified in the image of the large particle may be derived as an area of each large particle. Alternatively, there may be various methods for deriving the area of the large particles.

Thereafter, when the area of each identified large particles is derived, the large particles may be divided into different sizes for each area. For example, the large particles may be distinguished from 1 to k by sorting the sorted large particles into different sizes for each area. On the other hand, since the large particles are divided into different sizes according to areas, the number of 1-th large particle may be more than one, the number of k-th large particle may be more than one, and the number of large particle between 1 and k may be one or more. Alternatively, among the large particles numbered from 1 to k, the large particle of which the number is one may exist.

On the other hand, the process of deriving the area of each of the identified large particles and sorting the large particles into different sizes for each area may further include a process of sorting the sorted large particles into a plurality of groups according to sizes. This is exemplarily explained below.

For example, after deriving the area of each of the indentified large particle, when the large particles numbered from 1 to k are identified in the image of the large particles by sorting the large particles into different sizes for each area, if an area (mm²) of the identified large particles is contained within a size range of 3x3 or more and 15×15 or less, the identified large particles may be sorted into a first group of 3x3 or more and less than 5x5, a second group of 5x5 or more and less than 10x10, and a third group of 10x10 or more and 15x15 or less. Here, the first group includes the large particles identified from 1 to i, the second group includes the large particles identified from i+1 to j, and the third group includes the large particles identified from j+1 to k.

In this case, the subsequent processes, such as a process of calculating a total area ratio on an image photographed for each identified large particle and a process of converting the total area ratio obtained for each identified large particle into a weight ratio, may be performed for each divided group. Also, similarly, the process of calculating the particle size distribution of the raw material by using the particle size distribution of the large particles and the process of using the obtained particle size distribution of the raw material in the process of preparing the subsequent raw material may also be performed for each divided group.

On the other hand, hereinafter, an exemplary embodiment will be described below, based on a case in which the process of sorting the large particles into different sizes according to areas does not include the process of sorting the identified large particles into a plurality of groups according to sizes. Alternatively, contents described below may be similarly applied even when the process of sorting the large particles into different sizes according to areas includes the process of sorting the sorted large particles into the plurality of groups according to sizes.

When the large particles are divided into different sizes for each area through the above-described process, a total area ratio of the photographed image (i.e., image of the large particles) may be obtained for each divided large particle. First, a total area of the image of the large particles may be calculated. Here, a pixel area of the entire image of the large particles may be calculated as a total area of the image of the large particles. Thereafter, a total area occupied by the large particle numbered 1 or large particles numbered 1 in the image of the large particles may be calculated. Here, the area of the pixels that large particle numbered 1 or the large particles numbered 1 occupied in the image of the large particles may be calculated as the total area. Next, in the same manner, from the large particle numbered 2 to large particle numbered k, the total area occupied by each numbered large particle or each numbered large particles in the image of the large particles is calculated. Thereafter, a total area ratio on the image (image of the large particles) photographed for each sorted large particle may be calculated by calculating a total area ratio on the image of the large particles, which is occupied by each numbered large particle or each numbered large particles to a total area of the image of the large particles.

When the total area ratio of the image photographed for each large particle is obtained, the total area ratio obtained for each sorted large particle may be converted into a weight ratio. The process of converting the total area ratio obtained for each large particles into the weight ratio may include a process of predicting the weight ratio for each sorted large particles according to the total area ratio obtained for each large particle using a particle size distribution model of the raw material created based on data learned in advance by artificial intelligence, and replacing the total area ratio obtained for each large particle with the weight ratio predicted for each large particles.

The particle size distribution model of raw materials is a mathematical and statistical model built to predict the weight ratio of the particles when the area ratio of the particles divided into different sizes for each area is known on the image of the large particles. This model may be built by artificial intelligence based on learning data. Also, the learning data may include operation data derived from performance information of steel making operations and experiment data prepared through crushing experiments using coal. Here, the operation data and experiment data may include unstructured data such as a photograph of crushed coal, and structured data such as the crushed particle size of the coal, which is matched with the photograph, a weight of each particle size of the crushed coal, and the hard grove index of the coal. Also, this learning data may be learned by artificial intelligence using the deep learning. Alternatively, the method of training the learning data to artificial intelligence and specific algorithms used for learning may be various.

That is, the total area ratio for each large particles numbered from 1 to k may be input into the particle size distribution model of the raw material, and the total weight ratio for each large particle numbered from 1 to k may be predicted and outputted. For example, when the area ratio of the large particle numbered 1 is A¹ %, the area ratio of the large particle numbered 2 is A² %, and the area ratio of the large particle numbered K is A^{K} % to the total area of the image of the large particle, an area ratios thereof may be calculated as the particle size distribution of the raw material. Also, based on this, a weight ratio of the large particle numbered 1 to the total weight of the raw material may be predicted as B¹ wt %, a weight ratio of the large particle numbered 2 may be predicted as B² wt %, and a weight ratio of the large particle numbered K may be predicted as B^{K} wt %. The predicted weight ratios may be outputted. Thereafter, the total area ratio obtained for each large particles may be replaced with the weight ratio predicted for each large particles. Through these processes, the weight ratio predicted for each identified large particles of the raw material may be analyzed as the particle size distribution of the large particles.

When the weight ratio of each particle to the weight of the raw material for each particle divided into different sizes for each area is analyzed by analyzing the particle size distribution of the large particles, the process S600 of calculating the particle size distribution of the raw material by using the particle size distribution of the large particles is performed This process may include obtaining the weight ratio of the small particles separated from the top surface of the raw material before photographing the image of the large particles and calculating the particle size distribution of the entire raw material by using the weight ratio of each large particle and the weight ratio of the small particles.

First, the process of calculating the weight ratio of the separated small particles may be performed. Specifically, when converting the total area ratio calculated for each sorted large particle into the weight ratio, a process of calculating the weight ratio of the separated small particles may be performed.

Here, through the process of calculating the weight ratio of the large particles by adding the weight ratios predicted for each large particle and the process of using the weight ratio of the small particles to add up to 100 %, specifically 100 wt % by combining the weight ratios of the large particles, the weight ratio of the separated small particles may be calculated. For example, by adding up the weight ratios of all large particles from numbered 1 to K, the weight ratio of all large particles to the total weight of the raw material may be calculated. Here, both large particles and small particles are particles of the raw material, and when the particles of the raw material are not the large particles, particles correspond to the small particles, and similarly, when the particles of the raw material are not the small particles, the particles correspond to the large particles. That is, the large particles and the small particles have a complementary set relationship. Thus, the weight ratio that is added with the weight ratio of the large particles becomes 100%, specifically 100 wt%, may be the weight ratio of the small particles to the total weight of the raw material. For example, when a value obtained by subtracting 100 weight percent (100 wt %) plus the weight ratio of all large particles numbered from 1 to K (B¹ wt % + B² wt % + ... + B^{K} wt %) is C wt %, the weight ratio of small particles may be C wt %.

After obtaining the weight ratio of small particles, the process of calculating the particle size distribution of the entire raw material may be performed. That is, the particle size distribution of the entire raw material may be obtained by using the weight ratio of each large particle and the weight ratio for each small particle. For example, the weight ratio of small particles and large particles numbered from 1 to K may be used as the particle size distribution of the entire raw material. That is, the particle size distribution obtained through this process may be the weight distribution for each separate particle.

When the particle size distribution of the selected raw material is obtained, a process of applying the particle size distribution of the selected raw material to all of the plurality of raw materials is performed by using the hardgrove index of each of the plurality of raw materials. That is, the hardgrove index of each of the plurality of raw materials may be known. Alternatively, the hardgrove index may be obtained directly by performing a crushing experiment on a plurality of raw materials. Also, the distribution of the crushed particle size of the raw material may be varied according to the change in the hard grove index. Here, the variation in the particle size distribution of the crushed raw material due to the variation in the hardgrove index of the raw material may be derived from a mathematical relationship for each small particle and each large particle. Alternatively, the change in the particle size distribution of the crushed raw material according to the change in the hardgrove index of the raw material may be derived for each small particle and each large particle in the form of a look-up table created from measured data.

Thus, the particle size distribution of the selected raw material is determined by utilizing the hardgrove index of each of the plurality of raw materials, such as prepared relational equations and look-up tables may be calculated in order to know the variation in the particle size distribution of the crushed raw material due to the change in the hardgrove index of the raw material.

When the particle size distribution of each of the plurality of raw materials is obtained, the process S700 of utilizing the obtained particle size distribution of the raw materials in the process of preparing subsequent raw materials is performed. Specifically, for each of a plurality of raw materials, the particle size distribution of the obtained raw material is compared with a predetermined reference particle size distribution, and according to the comparison result, the crushing conditions of the subsequent raw material are controlled, and the subsequent raw material may be crushed under the controlled crushing condition. Here, the reference particle size distribution ensures that when producing blended raw materials by mixing a plurality of raw materials at a predetermined mixing ratio, each raw material may be evenly mixed within the blended raw materials, and when producing coke with the manufactured blended raw materials, the quality of coke is improved. This is the desired particle size distribution of each raw material to achieve the desired quality, and the standard particle size distribution may vary depending on the characteristics of the raw material.

For example, when the plurality of raw materials are the first raw material M1 to the eighth raw material M8, first, the particle size distribution of the first raw material M1 is compared with the reference particle size distribution of the first raw material M1. Here, among the particle size distributions of the first raw material M1, the particle size distribution of small particles is larger than the reference particle size distribution for small particles, and the particle size distribution of at least some of the divided major particles may be smaller than the standard particle size distribution for the corresponding minor particles. In this case, the first raw material M1 may be excessively crushed in the raw material crushing device 30 to a desired degree. Accordingly, in order to reduce the degree to which the subsequent first raw material M1 is crushed in the raw material crushing device 30, when crushing the subsequent first raw material M1, the rotation speed of the hammer is reduced to a predetermined rotation speed, and the hammer and the rebound The crushing conditions of the subsequent first raw material M1 are controlled, such as increasing the spacing between the plates to a predetermined interval. Alternatively, the opposite case is also possible. Also, the raw material crushing device 30 may be controlled under controlled crushing conditions, so that when the raw material is crushed in the raw material crushing device 30, the first raw material M1 may be crushed under controlled crushing conditions.

Similarly, from the second raw material M2 to the eighth raw material M8, the particle size distribution of each raw material is compared with the standard particle size distribution of each raw material, and according to the results, the crushing conditions of each subsequent raw material are controlled. Each subsequent raw material may be crushed under the specified crushing conditions. As a result, it is possible to prepare the subsequent first raw material M1 to the subsequent eighth raw material M8 whose degree of crushing is adjusted, and to perform the process from the process of transporting the prepared raw material to the subsequent process with the prepared raw material. Accordingly, it is possible to ensure that subsequent raw materials satisfy the standard particle size distribution, to manufacture blended raw materials using subsequent raw materials that satisfy the standard particle size distribution, and to manufacture coke using the manufactured blended raw materials, thereby reducing the quality deviation of the blended raw materials and coke.

On the other hand, according to a modified exemplary embodiment, before performing the process of transporting the prepared raw materials, a predetermined method is used to verify and secure the consistency of the particle size distribution model of the raw materials used to analyze the particle size distribution of the particles and perform an experiment and use the results to supplement the particle size distribution model of the raw material.

For example, a small amount of raw materials that do not affect the raw material mixing ratio of the mixed raw materials manufactured from a plurality of raw materials are collected from a plurality of positions in each of the plurality of hoppers. Thereafter, the plurality of collected raw materials are transported to a laboratory equipped to perform certain experiments to verify and secure the consistency of the particle size distribution model of the raw materials.

Thereafter, on a table provided in the laboratory, a plurality of collected raw materials are arranged in a predetermined area and a height for each type of coal, and each is arranged by using an suctioner provided in the laboratory to suction raw material particles less than 3 mm in size. After suctioning raw material particles less than 3 mm in size from the top surface of each raw material, images are obtained by photographing each top surface. By using the obtained images, artificial intelligence (AI)-based image analysis techniques, and a particle size distribution model of raw materials, the particle size distribution of raw material particles larger than 3 mm is analyzed and the particle size distribution of each collected raw material is obtained. This is referred to as the analyzed particle size distribution.

Next, after returning the raw material particles of less than 3 mm in size that are suctioned from each of the plurality of raw materials to the top surface of each raw material, for example, by using a screen provided in a laboratory, each raw material is sorted according to the particle size, and by using a weight measuring device provided in the laboratory, the weight of the raw materials sorted by particle size is measured, and the weight measurement results are used to determine the particle size distribution of each raw material. This is referred to as the measured particle size distribution.

Thereafter, for each of the plurality of raw materials, the analyzed particle size distribution and the measured particle size distribution are compared for each particle size of each raw material, and when the highest value of the difference is, e.g., 3 wt % or less, the particle size distribution model of the raw materials in accordance with an exemplary embodiment to is consistent.

On the other hand, when a difference value exceeds 3 wt% based on a comparison result, it is determined that the particle size distribution model of the raw material in accordance with an exemplary embodiment needs to be supplemented. Thus, a predetermined calibration algorithm to complement the particle size distribution model of the raw material may be designed and reflected in the particle size distribution model of the raw material. Here, the method of designing the calibration algorithm may vary. However, the exemplary embodiment is not limited thereto. On the other hand, the above-mentioned experiment may be repeated 20 or more times in the same manner to ensure the reliability of the experiment results.

The above exemplary embodiments of the present disclosure are for description of the present disclosure, not for limiting the present description. It should be noted that the configurations and methods disclosed in the above exemplary embodiments of the present disclosure may be combined and modified in various forms by combining or crossing each other, and modifications thereof may also be considered to fall within the scope of the present disclosure. That is, the present disclosure will be implemented in a variety of different forms within the scope of the claims and equivalents thereof, and those skilled in the art to which the present disclosure pertains will understand that various exemplary embodiments are possible within the scope of the technical spirit of the present disclosure.

### [Description of the reference numerals]

100: Transport unit, 200: Sorting unit, 300: Photographing unit, 400: Analysis unit, 500: Return unit, 600: Management unit

## Claims

1. A device for particle size management, the device comprising:
a transport unit configured to transport a raw material;
a sorting unit configured to sort small particles from the raw material and retain large particles greater than the small particles;
a photographing unit arranged to face the transport unit to obtain an image of the large particles; and
an analysis unit configured to analyze a particle size distribution of the raw material from the image obtained by the photographing unit.

2. The device of claim 1, further comprising a return unit connected to the sorting unit and disposed on the transport unit to return the sorted small particles onto the large particles from which the image is obtained.

3. The device of claim 1, further comprising a management unit configured to control a supply condition of a subsequent raw material to be supplied to the transport unit by using the particle size distribution analyzed by the analysis unit.

4. The device of claim 1, wherein the transport unit comprises:
a hopper configured to receive the raw material; and
a transporter having a belt configured to continuously transport the raw material discharged from the hopper.

5. The device of claim 4, wherein the sorting unit comprises a suctioner having an opened surface facing the transport unit to suction the small particles and a suction pump connected to the suctioner.

6. The device of claim 4 or 5, wherein the sorting unit has a sieve having a plurality of openings for suctioning the small particles from the raw material.

7. The device of claim 6, wherein the opening has a size greater than 0 mm and less than 3 mm.

8. The device of claim 6, wherein the sieve is disposed continuously in a direction of a width of the belt between 10% to 90% of the width of the belt configured to transport the raw material.

9. The device of claim 4, wherein the sorting unit comprises one of a first sorter configured to sink the small particles relative to the large particles from a top surface of the raw material and a second sorter configured to roll the small particles along the top surface of the raw material so that the small particles are spaced apart from the large particles.

10. The device of claim 8, wherein a photographing area of the photographing unit comprises the entire width of the belt configured to transport the raw material.

11. The device of claim 4, wherein a plurality of hoppers are provided to receive a plurality of types of raw materials, respectively,
the transporter comprises a plurality of first transporters connected to the hoppers, respectively, and a second transporter connected to the plurality of first transporters, and
the sorting unit and the photographing unit are disposed at a side of the plurality of first transporters.

12. The device of claim 11, wherein the sorting unit is disposed at a side of one or more first transporters selected from among the plurality of first transporters, and
the photographing unit is disposed at a side of each of the transporters at which the sorting units are disposed.

13. The device of claim 1, wherein the photographing unit obtains an image of the large particles from which the small particles are separated, and
the analysis unit analyzes the particle size distribution by identifying individual large particles in a photographed image and obtains the particle size distribution of the entire raw material by using the analyzed particle size distribution of the large particles.

14. The device of claim 13, wherein the analysis unit derives an area of the identified large particles, sorts the large particles into different sizes for each area, calculates a total area ratio on the image obtained for each sorted large particle, converts the total area ratio obtained for each sorted large particle based on data learned in advance by artificial intelligence into a weight ratio, analyzes the weight ratio for each sorted large particle as the particle size distribution of the large particles, calculates a weight ratio of the separated small particles by using the weight ratio for each large particle, and calculates the particle size distribution of the entire raw material by using the weight ratio for each large particle and the weight ratio for each small particle.

15. The device of claim 14, wherein the analysis unit sorts the sorted large particles into a plurality of groups according to sizes to analyze the weight ratio for sorted large particles as the particle size distribution of the large particles, and calculates the particle size distribution of the entire raw material by using the weight ratio for each group of the large particles and the weight ratio for each group of the small particles.

16. The device of claim 12, wherein the analysis unit applies the particle size distribution obtained from the raw material transported by the selected first transporter to all of a plurality of raw materials by using crushing characteristics of the plurality of raw materials.

17. The device of claim 3, wherein the management unit compares the particle size distribution of the entire raw material analyzed by the analysis unit with a preset reference particle size distribution and, according to a comparison result, controls a crushing condition of a subsequent raw material to be supplied to the transport unit, thereby managing a quality of the subsequent raw material.

18. A method for particle size management, the method comprising:
preparing a raw material;
transporting the prepared raw material;
sorting the transported raw material into small particles and large particles greater than the small particles;
obtaining an image by photographing the large particles;
analyzing a particle size distribution of the large particles from the photographed image; and
calculating a particle size distribution of the raw material by using the particle size distribution of the large particles.

19. The method of claim 18, wherein the transporting of the prepared raw material comprises transporting the prepared raw material at a speed in a range of 0.1 m/s to 0.15 m/s.

20. The method of claim 18, wherein the sorting of the transported raw material into the small particles and the large particles greater than the small particles comprises suctioning the small particles from a top surface of the raw material and retaining the large particles,
the obtaining of the image comprises obtaining an image of the large particles from which the small particles are separated at the top surface of the raw material, and
discharging the separated small particles onto the large particles disposed on the top surface of the raw material after the obtaining of the image.

21. The method of claim 20, wherein the analyzing of the particle size distribution of the large particles from the photographed image comprises:
deriving an area of the large particles from the image of the large particles and sorting the large particles into different sizes for each area;
calculating a total area ratio in the photographed image for each sorted large particle; and
converting the total area ratio calculated for each sorted large particle into a weight ratio.

22. The method of claim 21, wherein the sorting of the large particles into the different sizes for each area comprises sorting the sorted large particles into a plurality of groups according to the sizes,
wherein the calculating of the total area ratio and the converting of the total area ratio into the weight ratio are performed for each of the sorted groups.

23. The method of claim 21, wherein the calculating of the particle size distribution of the raw material by using the particle size distribution of the large particles comprises:
calculating a weight ration of the small particles sorted during the converting of the total area ratio calculated for each sorted large particle into the weight ratio; and
calculating a particle size distribution of the entire raw material by using the weight ratio for each large particle and the weight ratio for each small particle.

24. The method of claim 23, wherein the converting of the total area ratio calculated for each large particle into the weight ratio comprises predicting a weight ratio for each sorted large particle according to the total area ratio calculated for each large particle by using a particle size distribution model of the raw material created based on data learned in advance by artificial intelligence, and replacing the total area ratio calculated for each large particle with the predicted weight ratio,
wherein the calculating of the weight ratio of the separated small particles comprises:
calculating a weight ratio of the large particles by adding the predicted weight ratio for each large particle; and
using a weight ratio that becomes 100 % when added with the weight ratio of the large particles as a weight ratio of the small particles.

25. The method of claim 21, wherein the preparing of the raw material comprises preparing a plurality of raw materials having different hardgrove indices (HGI), and
the transporting of the prepared raw material comprises transporting each of the plurality of raw materials,
wherein sorting the transported raw material into small particles and large particles greater than the small particles, obtaining an image by photographing the large particles, analyzing a particle size distribution of the large particles from the photographed image, and calculating a particle size distribution of the raw material by using the particle size distribution of the large particles are performed on at least one selected from among the plurality of raw materials.

26. The method of claim 25, further comprising, after the calculating of the particle size distribution of the raw material is performed on the selected raw material, applying the particle size distribution of the selected raw material to all of the plurality of raw materials by using the hardgrove index (HGI) of each of the plurality of raw materials.

27. The method of any one of claims 18 to 26, wherein the preparing of the raw material comprises crushing the raw material; and
using the calculated particle size distribution of the raw material for preparing a subsequent raw material after the calculating of the particle size distribution of the raw material.

28. The method of claim 27, wherein the using of the preparing of the subsequent raw material comprises:
comparing the calculated particle size distribution of the raw material with a predetermined reference particle size distribution;
controlling a crushing condition of the subsequent raw material according to a comparison result; and
crushing the subsequent raw material under the controlled crushing condition.
